# EUROPÄISCHE PATENTSCHRIFT

(11) **EP 2 108 099 B1**
(45) Veröffentlichungstag und Bekanntmachung des Hinweises auf die Patenterteilung: **13.04.2011**
(21) Anmeldenummer: 08865780.4
(22) Anmeldetag: 19.11.2008
(51) Int. Cl.: F25B 17/08, F25B 49/04

(54) **VERFAHREN ZUR LEISTUNGSREGELUNG EINER SORPTIONSKÄLTEANLAGE UND VORRICHTUNG HIERFÜR**
METHOD FOR CONTROLLING THE POWER OF A SORPTION REFRIGERATION SYSTEM AND DEVICE THEREFOR
PROCÉDÉ DE RÉGLAGE DE LA PUISSANCE D'UNE INSTALLATION FRIGORIFIQUE À SORPTION ET SON DISPOSITIF

(30) Priorität: 20.12.2007 DE 102007061551
(43) Veröffentlichungstag der Anmeldung: 14.10.2009
(73) Patentinhaber: SorTech AG, 06120 Halle/Saale (DE)
(72) Erfinder: BÜTTNER, Thomas, 04275 Leipzig (DE); MITTELBACH, Walter, 79111 Freiburg (DE)
(74) Vertreter: Meissner, Bolte & Partner
(86) Internationale Anmeldenummer: PCT/EP2008/065822
(87) Internationale Veröffentlichungsnummer: WO 2009/080415

(56) Entgegenhaltungen:
- EP-A- 0 731 324
- WO-A-88/02089
- DE-A1- 10 062 174
- JP-A- 3 007 859
- JP-A- 7 253 257
- US-A- 4 548 046

## Beschreibung

Die Erfindung betrifft ein Verfahren zur Leistungsregelung einer Sorptionskälteanlage nach dem Anspruch 1 und eine Vorrichtung hierfür nach dem Oberbegriff des Anspruchs 4. Das Dokument EP-A- 0 731 324 offenbart sowohl ein Verfahren gemäß dem Oberbegriff des Anspruchs 1 als auch eine Vorrichtung gemäß dem Oberbegriff des Anspruchs 4.

Bei Sorptionskälteanlagen, insbesondere Adsorptionswärmepumpen oder Adsorptionskältemaschinen, wird ein zyklisches Beaufschlagen einer Adsorbereinheit zum einen mit einem heißen Fluid, insbesondere Heißwasser, zum Desorbieren und Austreiben eines Adsorbats und zum anderen mit einem kalten Fluid zum Abführen der anfallenden Adsorptionswärme ausgeführt. Dabei werden ein Kondensator mit einem Kühlmittel, beispielsweise Kühlwasser, und ein Verdampfer mit einem Kälteträgerfluid im wesentlichen kontinuierlich durchströmt.

Die Beaufschlagung der Adsorbereinheit erfolgt üblicherweise mittels gesteuerter Umschaltventile. Die Ansteuerung der Ventile erfolgt durch eine Steuereinheit. Nach dem Stand der Technik wird hierfür in der Regel ein fester Zeittakt vorgegeben, sodass in einer definierten, zweckmäßig vorgebbaren, aber während des Prozessverlaufs fixen Zeitkonstante Adsorptionen und Desorptionen ausgeführt werden.

Hierzu werden nach dem Stand der Technik Phasen in einem zyklischen Prozess durchlaufen. In der ersten Phase wird in der Adsorbereinheit ein Adsorbat adsorbiert, wobei Wärme abgegeben wird. In einer zweiten Phase erfolgt eine Desorption und ein Austreiben des Adsorbats, wobei Wärme aufgenommen wird. Meist wird auf geteilte Adsorbereinheiten zurückgegriffen, bei denen ein erster Adsorber eine Adsorption und ein zweiter Adsorber eine Desorption ausführt.

Die dabei erreichbaren Kälteleistungen und die Wirkungsgrade (COP) der Anlage sind dabei mit den Zeitdauern der Sorptionsphasen korreliert. Kurze Phasendauern bedeuten, dass die Adsorptionen und Desorptionen tendenziell unvollständig ausgeführt werden. Dies bedingt eine hohe Kälteleistung, aber einen herabgesetzten Anlagewirkungsgrad (COP).

Verlängerte Phasendauern bedingen ein vollständigeres Adsorbieren und Desorbieren. Die Kälteleistung ist dabei geringer, der Anlagewirkungsgrad steigt dabei jedoch. Bei der im Stand der Technik üblichen fixen Vorgabe der Zeitkonstanten für die jeweiligen Phasen ist die Sorptionskälteanlage auf einen bestimmten, mehr oder weniger effizienten Arbeitspunkt festgelegt. Dieser ist jedoch starr und kann auf wechselnde Einsatzbedingungen, zum Beispiel eine schwankende Kühllast, nicht reagieren. Der gewählte Arbeitspunkt liegt dann nicht mehr im optimalen Bereich und die Sorptionskälteanlage arbeitet ineffizient.

Es ergibt sich aus dem Vorgenannten die Aufgabe der Erfindung, ein Verfahren zur Leistungsregelung einer Sorptionskälteanlage anzugeben, mit dem der Arbeitspunkt der Anlage selbsttätig und flexibel auf wechselnde Einsatzbedingungen angepasst werden kann und insbesondere die Kälteleistung bzw. der Anlagenwirkungsgrad in einem den Einsatzbedingungen entsprechenden Optimum verbleiben.

Die Lösung der Aufgabe erfolgt mit einem Verfahren zur Leistungsregelung einer Sorptionskälteanlage gemäß der Lehre des Anspruchs 1 und einer Sorptionskälteanlage mit den Merkmalen des Anspruchs 4, wobei die jeweiligen Unteransprüche zweckmäßige bzw. vorteilhafte Ausgestaltungen des Verfahrens bzw. der Vorrichtung enthalten.

Bei dem erfindungsgemäßen Verfahren in Verbindung mit den eingangs genannten Verfahrensschritten erfolgt eine Temperaturmessung des Kälteträgers im Rücklauf des Verdampfers. In der Sorptionsphase erfolgt eine Berechnung einer gemittelten Kälteträgeraustrittstemperatur in Verbindung mit einem Vergleich der gemittelten Kälteträgeraustrittstemperatur mit einer aktuellen Kälteträgeraustrittstemperatur.

Zur Beendigung der Sorptionsphase wird in Abhängigkeit von der Differenz zwischen der gemittelten Kälteträgeraustrittstemperatur und der aktuellen Kälteträgeraustrittstemperatur ein Steuersignal ausgelöst.

Das Verfahren zielt darauf ab, die Kälteleistung der Anlage dadurch zu optimieren, indem die Zeitdauer des Adsorptionsprozesses in Abhängigkeit von der momentanen Austrittstemperatur des Kälteträgers eingestellt wird. Dabei wird der Umstand ausgenutzt, dass die Temperatur des Kälteträgers mit zunehmender Länge des Adsorptionsprozesses ansteigt, weil dieser bei zunehmender Zeitdauer ineffektiv wird. Als Vergleichsgröße für die momentane Austrittstemperatur des Kälteträgers dient dabei die gemittelte Austrittstemperatur des Kälteträgers. Diese ist eine aus dem gegenwärtig ablaufenden Adsorptionsprozess gewonnene oder auch vorgebbare Gerätekonstante des jeweils vorliegenden Adsorbers.

Bevorzugt wird die Sorptionsphase in der Adsorbereinheit im wesentlichen zu einem Zeitpunkt beendet, wenn die Differenz zwischen der gemittelten Kälteträgeraustrittstemperatur und der aktuellen Kälteträgeraustrittstemperatur verschwindet, d. h. gegen Null geht.

An diesem Punkt entspricht die aktuelle Austrittstemperatur des Kälteträgers der gemittelten Austrittstemperatur. Bei einer solchen Vorgehensweise wird der Umstand ausgenutzt, dass bei verschiedenen Durchläufen einzelner Sorptionsphasen die aktuellen Austrittstemperaturen des Kälteträgers um die gemittelte Austrittstemperatur herum schwanken. Der Schnittpunkt beider Zeitverläufe markiert dann einen Zeitpunkt, ab dem die momentan ablaufende Adsorption an Effektivität verliert. Wird nun der Adsorptionsprozess an diesem Zeitpunkt beendet, maximiert sich die in der aktuell ablaufenden Adsorptionsphase erreichbare Kälteleistung.

Die gemittelte Kälteträgeraustrittstemperatur kann bei einer Ausführungsform des Verfahrens als ein Kälteträgertemperatursollwert vorgegeben werden. In Verbindung mit den genannten Verfahrensschritten kann nun über die Vorgabe dieses Sollwertes die Zeitdauer der ersten und dritten Phase innerhalb der Anlage festgelegt werden.

Der Ablauf der Adsorptionsphasen innerhalb der Anlage wird dadurch nicht mehr durch die Vorgabe von für die Kälteleistung nicht ursächlich relevanten Zeitdauern der einzelnen Phasen bestimmt, sondern durch einen die Wirkung der Anlage eindeutiger beschreibenden Betriebsparameter in Form einer Temperatur, auf den sich die Anlage wie beschrieben selbsttätig einregelt.

Eine Sorptionskälteanlage umfasst eine Adsorbereinrichtung, einen Kondensator und einen mit einem Kälteträgerfluid durchströmten Verdampfer mit einer Ventileinrichtung zur gesteuerten Beaufschlagung der Adsorbereinrichtung. Erfindungsgemäß ist im Rücklauf des Verdampfers eine Temperaturmesseinrichtung vorgesehen. Diese ist mit einer Steuereinheit verbunden, die ein Rechenglied zum Bestimmen einer über mindestens eine Adsorptionsphase gemittelten Kälteträgeraustrittstemperatur und ein Vergleichsglied zum Vergleich der gemittelten Kälteträgeraustrittstemperatur mit einer aktuellen Kälteträgeraustrittstemperatur aufweist. Weiterhin ist ein Aktor zum Stellen der Ventileinrichtung in Abhängigkeit von der Differenz zwischen der gemittelten Kälteträgeraustrittstemperatur und einer aktuellen Kälteträgeraustrittstemperatur vorgesehen.

Die Adsorbereinrichtung besteht zweckmäßigerweise aus einer wechselnd beaufschlagbaren Anordnung aus einem ersten Adsorber und einem zweiten Adsorber.

In Verbindung damit ist eine den Vorlauf zu beiden Adsorbern regulierende erste Ventileinrichtung und eine den Rücklauf von beiden Adsorbern regulierende zweite Ventileinrichtung vorgesehen.

Die erste und/oder die zweite Ventileinrichtung besteht aus einer Anordnung aus jeweils paarweise geschalteten 3-Wege-Umschaltventilen. Das Kälteträgerfluid ist bei einer Ausführungsform Wasser.

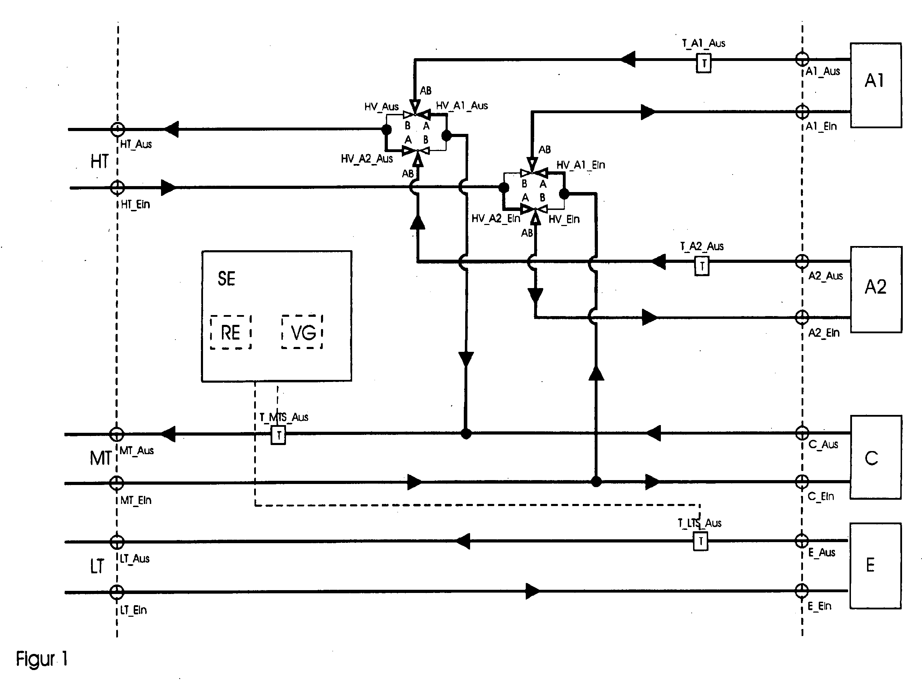

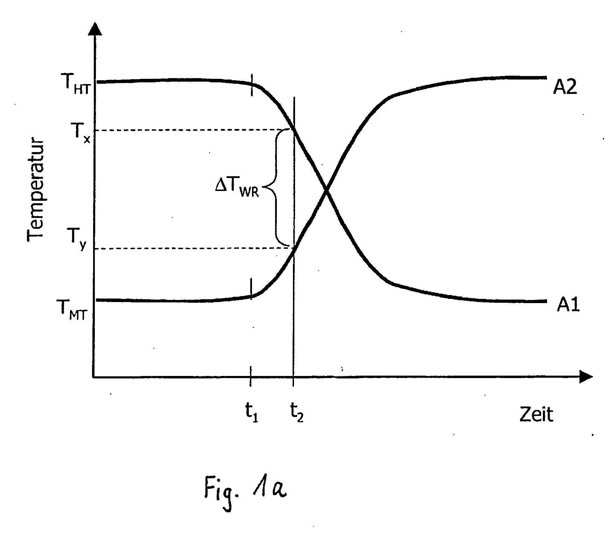

Das erfindungsgemäße Verfahren und die erfindungsgemäße Sorptionskältemaschine sollen nachfolgend anhand beispielhafter Ausführungsformen näher beschrieben werden. Es werden für gleiche oder gleichwirkende Teile die selben Bezugszeichen verwendet. Zur Verdeutlichung dienen die beigefügten Figuren 1 bis 6.

Es zeigen:
Fig. 1 einen beispielhaften hydraulischen Schaltplan in der ersten Sorptionsphase,
Fig. 1a einen beispielhaften Temperaturverlauf während einer Wärmerückgewinnungsphase,
Fig. 2 einen hydraulischen Schaltplan in der zweiten Sorptionsphase,
Fig. 3 bis 5 Diagramme mit typischen Zeitverläufen der gemittelten und aktuellen Kältemittelaustrittstemperatur und
Fig. 6 eine Vorzeichenfunktion gemäß Figur 5.

Fig. 1 zeigt einen hydraulischen Schaltplan einer beispielhaften Sorptionskälteanlage. In diesem Schaltplan sind die Flüsse während der ersten Sorptionsphase hervorgehoben. Die Sorptionskälteanlage weist ein Heißreservoir HT, ein Kühlmittelreservoir MT und ein Kälteträgerreservoir LT auf. Das Heißreservoir beinhaltet ein Heizmittel zum Desorbieren und Austreiben eines Adsorbats. In den folgenden Ausführungsformen wird als Heizmittel Heißwasser angenommen.

Das Kühlmittelreservoir enthält ein Fluid zum Abführen der Adsorptionswärme. In den im Folgenden beschriebenen Ausführungsformen wird als Kühlmittel Wasser verwendet.

Das Kälteträgerreservoir enthält ein Fluid, dem in einem Verdampfer E Wärme entzogen wird. Bei den nachfolgenden Ausführungsformen besteht der Kälteträger aus Kaltwasser. Der Kälteträgerkreislauf besteht aus einer zwischen einem Auslass LT_IN des Kälteträgerreservoirs LT und einem Eingang E_IN des Verdampfers E verlaufenden Kälteträgervorlaufleitung und einer zwischen einem Ausgang E_OUT des Verdampfers und einem Rücklauf LT_OUT des Kälteträgerreservoirs LT verlaufenden Kälteträgerrücklaufleitung.

Als Adsorbereinrichtung ist eine zweiteilige Anordnung aus wechselnd beaufschlagten und im Gegentakt arbeitenden Adsorbern A1 und A2 vorgesehen.

In die Kälteträgerrücklaufleitung ist ein Kälteträgerrücklaufsensor T_LTS_OUT geschaltet, der die Temperatur des Kälteträgers im Rücklauf des Verdampfers E misst.

Zwischen einem Auslass MT_IN und einem Eingang C_IN eines Kondensators C verläuft eine Kühlmittelvorlaufleitung. Diese ist mit einer zwischen einem Ausgang C_OUT des Kondensators C und einem Rücklauf MT_OUT des Kühlmittelreservoirs verlaufenden Kühlmittelrücklaufleitung zu einem Kühlmittelkreislauf geschaltet. In der Kühlmittelrücklaufleitung ist ein Kühlmittelrücklaufsensor T_MTS_OUT geschaltet, der die Temperatur des Kühlmittels im Kondensatorrücklauf misst.

Eine Steuereinheit SE registriert die Temperatursignale vom Kälteträgerrücklaufsensor T_LTS_OUT und steuert den Betrieb der nachfolgend beschriebenen Ventileinrichtungen.

Es sind zwei Ventileinrichtungen zur Steuerung der Sorptionskälteanlage vorgesehen. Eine erste Ventileinrichtung HV_IN steuert den Vorlauf des ersten Adsorbers A1 und des zweiten Adsorbers A2 mit dem Heißwasser aus dem Heißreservoir HT bzw. mit dem Kühlwasser aus dem Kühlmittelreservoir MT, eine zweite Ventileinrichtung HV_OUT steuert den Rücklauf der beiden Adsorber. Jede Ventileinrichtung enthält von der Steuereinheit geschaltete Dreiwegeventile als Schaltaktoren.

Die Ventileinrichtung HV_IN besteht aus einem ersten Dreiwegeventil HV A1_IN, das das Beschicken des Adsorbers A1 regelt. Ein mittlerer Anschluss AB des Dreiwegeventils HV_A1_IN ist mit einem Eingang A1_IN des Adsorbers A1 gekoppelt. Ein Flügel A dieses Dreiwegeventils mündet in die Kühlmittelvorlaufleitung des Kühlmittelkreislaufs, ein Flügel B ist mit einem Auslass HT_IN des Heißreservoirs HT verbunden.

Über ein in der Ventileinrichtung HV_IN angeordnetes zweites Dreiwegeventil HV_A2_IN wird der Vorlauf des Adsorbers A2 geregelt. Der mittlere Anschluss AB dieses Dreiwegeventils ist mit dem Eingang A2_IN des Adsorbers A2 verbunden, der Flügel A ist mit dem Auslass HT_IN des Heißreservoirs HT verbunden, der Flügel B mit der Kühlmittelvorlaufleitung gekoppelt.

Eine zweite Ventileinrichtung HV_OUT steuert den Rücklauf des ersten Adsorbers A1 und zweiten Adsorbers A2 zum Heißreservoir HT und Kühlmittelreservoir MT. Die Ventileinrichtung HV_OUT besteht aus einem ersten Dreiwegeventil HV_A1_OUT zum Steuern des Rücklaufs aus dem Adsorber A1. Ein mittlerer Anschluss AB dieses Dreiwegeventils ist mit dem Ausgang A1_OUT des Adsorbers A1 gekoppelt. Ein Flügel A des Dreiwegeventils mündet in die zwischen einem Kondensator C und dem Kühlwasserreservoir MT verlaufende Kühlmittelrücklaufleitung ein. Ein Flügel B ist mit einem Rücklauf HT_OUT des Heißreservoirs HT verbunden.

In zweites Dreiwegeventil HV_A2_OUT steuert den Rücklauf des Adsorbers A2. der mittlere Anschluss AB dieses Dreiwegeventils ist mit dem Ausgang A2_OUT des Adsorbers A2 verbunden. Der Flügel A dieses Dreiwegeventils ist mit dem Rücklauf HT_OUT des Heißreservoirs HT gekoppelt. Der Flügel B mündet in die zwischen den Kondensator C und dem Kühlmittelreservoir MT verlaufende Kühlmittelrücklaufleitung.

Die Adsorber führen jeweils im Gegentakt Adsorptionen bzw. Desorptionen aus. Bei der in Fig. 1 gezeigten ersten Sorptionsphase sind die Ventileinrichtungen so geschaltet, dass im Adsorber A1 eine Adsorption und im Adsorber A2 eine Desorption ausgeführt wird. Über das Ventil HV_A1_IN, insbesondere über dessen geöffneten Flügel A und das Mittelstück AB, wird der Adsorber A1 mit Kühlmittel aus der Kühlmittelvorlaufleitung versorgt. Das Kühlmittel gelangt über das Ventil HV_A1_OUT, insbesondere von dessen Mittelstück AB und dessen Flügel A in die Kühlmittelrücklaufleitung und fließt dort wieder zum Kühlmittelreservoir MT zurück.

Zum Ausführen der Desorption wird der Adsorber A2 über das Ventil HV_A2_IN, insbesondere über dessen Flügel A und dessen Mittelstück AB mit Heißwasser aus dem Heißreservoir HT versorgt. Das Heißwasser fließt anschließend über das Ventil HV_A2_OUT, insbesondere über dessen Flügel A und dessen Mittelstück AB in das Heißreservoir HT zurück.

In der nachfolgenden Wärmerückgewinnungsphase findet nun ein Wärmeübergang vom Adsorber A1 zum Adsorber A2 statt. Fig. 1a zeigt einen sich dabei einstellenden beispielhaften zeitabhängigen Temperaturverlauf in den Adsorbern A1 und A2. Der Zeitpunkt t₁ markiert dabei den Beginn der Wärmerückgewinnungsphase, t₂ deren Ende.

Die Ausführung der Wärmerückgewinnung erfolgt ausschließlich über eine spezielle Kombination der Ventilstellungen, sodass keine zusätzliche Pumpe erforderlich ist, um das Wärmeträgerfluid mit der höheren Temperatur vom Adsorber A1 zum Adsorber A2 zu transportieren.

Vielmehr wird das Ventil HV_A1_IN in Durchflussrichtung zwischen den Anschlüssen A und AB und das Ventil HV_A1_OUT in Durchlassrichtung zwischen den Anschlüssen AB und A geschaltet. Das Ventil HV_A2_IN steht entsprechend dazu in Durchlassrichtung zwischen den Anschlüssen A und AB und das Ventil HV_A2_OUT ist in Durchlassrichtung zwischen den Anschlüssen AB und B geschaltet.

Bei diesen Ventilstellungen strömt das kalte Rückkühlfluid aus dem Kühlmittelreservoir MT in den zu kühlenden Adsorber A1, während dessen Rücklauf nicht sofort in das Kühlmittelreservoir MT, sondern zunächst in den Rücklauf des Heißreservoirs HT geführt wird. Dies erfolgt so lange, bis sich eine definierte Temperatur Tₓ im Rückkühlfluid einstellt. Gleichzeitig wird der momentan kalte Adsorber A2 mit dem Vorlauf des Heißreservoirs HT verbunden, während der zunächst noch kalte Rücklauf aus dem Adsorber A2 sich erwärmt und bis zum Erreichen einer Temperatur T_{y} in den Rücklauf des Kühlmittelreservoirs MT geführt wird.

Die Wärmerückgewinnungsphase wird dann zu dem Zeitpunkt t₂ beendet, wenn die Temperaturdifferenz zwischen den Temperaturen Tₓ und T_{y} einen gegebenen Wert ΔT_{WR} erreicht hat. Danach wird eine zweite Sorptionsphase eingeleitet.

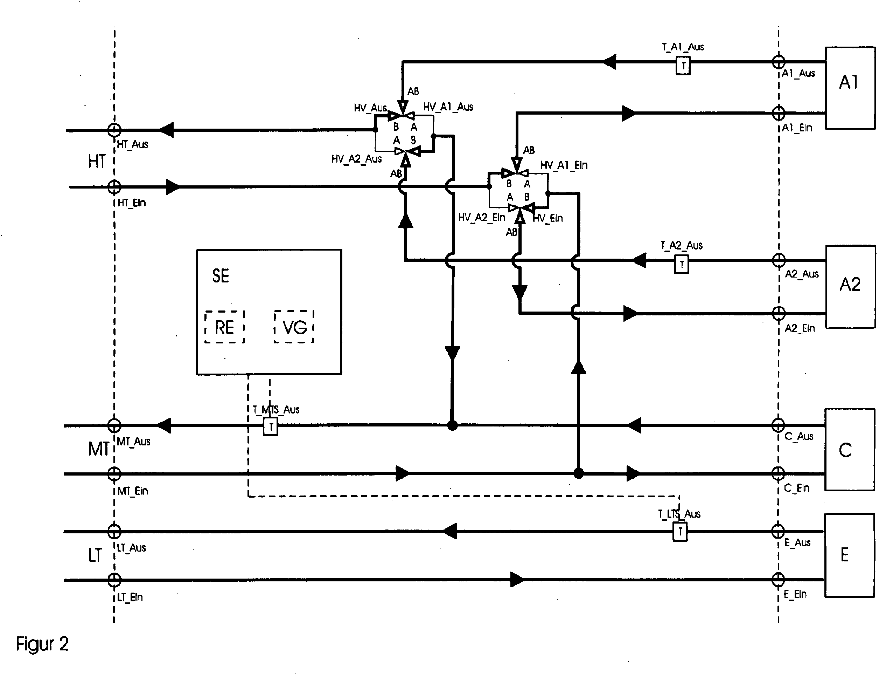

Bei der zweiten Sorptionsphase werden die Ventileinrichtungen in der in Fig. 2 dargestellten Weise geschaltet. In dem Adsorber A1 wird nun eine Desorption betrieben. Das Dreiwegeventil HV_A1_IN wird nun so geschaltet, dass über dessen Flügel B und dessen Mittelteil AB der Eingang A1_IN des Adsorbers A1 mit Heißwasser beschickt wird. Entsprechend wird das Dreiwegeventil HV_A1_OUT so gestellt, dass ein Rückfluss vom Ausgang A1_OUT des Adsorbers A1 zum Heißreservoir HT erfolgt.

Über das Ventil HV_A2_IN, insbesondere über dessen geöffneten Flügel B und das Mittelstück AB, wird der Adsorber A2 mit Kühlmittel aus der Kühlmittelvorlaufleitung versorgt. Das Kühlmittel gelangt über das Ventil HV_A2_OUT, insbesondere von dessen Mittelstück AB und dessen Flügel B in die Kühlmittelrücklaufleitung und fließt dort wieder zum Kühlmittelreservoir MT zurück. Damit wird nun in dem Adsorber A2 eine Desorption betrieben.

Bei einer darauf folgenden Wärmerückgewinnungsphase werden die Ventile so geschaltet, dass eine Wärmerückgewinnung vom Adsorber A2 zum Adsorber A1 erfolgt. Die bereits im Zusammenhang mit Fig. 1a gemachten Angaben sind nun dementsprechend auszulegen.

Die Steuereinheit SE registriert während der Sorptionsphasen über den Temperatur sensor T_LTS_OUT die Temperatur des Kälteträgers im Rücklauf des Verdampfers E und spricht die Ventileinrichtungen HV_IN und HV_OUT in Abhängigkeit von dem dabei gemessenen Temperaturverlauf an.

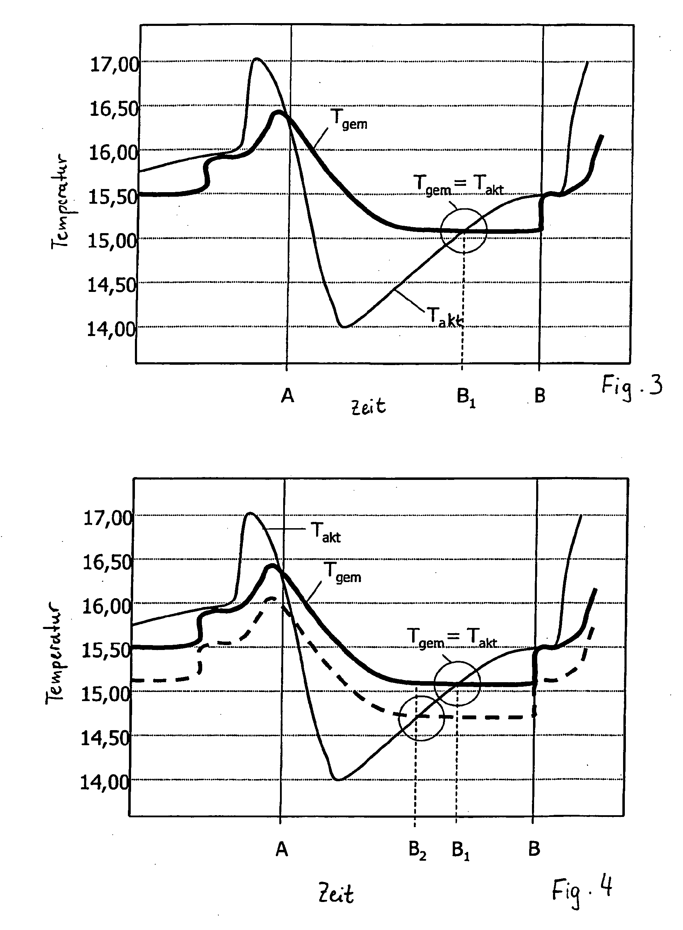

Das Diagramm im Fig. 3 illustriert dies. Dargestellt ist eine über der Zeit aufgetragene Temperatur des Kälteträgers. Am Temperatursensor wird ein Zeitverlauf der aktuellen Kälteträgertemperatur Takt gemessen und an die Steuereinheit übertragen. Die Steuereinheit errechnet in einer darin enthaltenen Recheneinheit RE eine gemittelte Kälteträgertemperatur T_{gem} und vergleicht diese in der Vergleichseinheit VG mit der aktuellen Temperatur Takt des Kälteträgers.

In dem Diagramm ist der Beginn einer Sorptionsphase mit dem Bezugszeichen A und das Ende der Sorptionsphase mit dem Buchstaben B bezeichnet. Die Kurve der gemittelten Temperatur beschreibt einen aus einer Reihe von Sorptionszyklen ermittelten durchschnittlichen Temperaturverlauf im Kälteträger während einer Sorptionsphase. Wie aus dem Diagramm zu entnehmen ist, fällt die Temperatur des Kälteträgers im Zeitverlauf zunächst steil ab und nähert sich gegen Ende der Sorptionsphase einem konstanten Endwert. Zum Abschaltzeitpunkt B steigt die Temperatur des Kälteträgers erneut sprunghaft an und nähert sich einem vorübergehenden Maximalwert, bevor eine erneute Sorptionsphase einsetzt.

Die bei einer einzelnen Sorptionsphase aktuell gemessene Temperatur Takt des Kühlträgers kann sich in ihrem Zeitverlauf deutlich von der mittleren Temperatur T_{gem} unterscheiden. Bei dem hier gezeigten Beispiel erreicht die aktuelle Temperatur zwischen den Sorptionsphasen ein deutlich höheres Maximum und durchläuft während der Sorptionsphase ein deutlich unter der gemittelten Temperaturkurve liegendes Minimum. Die aktuelle Kälteträgertemperatur steigt danach während der Sorptionsphase kontinuierlich an, schneidet im Zeitpunkt B₁ die Kurve der gemittelten Temperatur T_{gem} und übersteigt diese bis zum Zeitpunkt B. Dies bedeutet, dass die Kälteleistung in der Sorptionsphase zwischen dem Zeitpunkt B₁ und dem Zeitpunkt B absinkt.

Erfindungsgemäß wird nun die Sorptionsphase am Zeitpunkt B₁ beendet. Die Steuereinheit vergleicht dazu fortlaufend die aktuelle Temperatur des Kälteträgers in dem Vergleichsglied und gibt im Zeitpunkt B₁ einen Steuerimpuls an die Ventileinrichtungen HV_IN und HV_OUT, d.h. an die darin enthaltenen Dreiwegeventile HV_A1_IN, HV_A2_IN, HV_A1 OUT und HV_A2_OUT, aus, sodass die Sorptionsvorgänge mindestens in einem der beiden Adsorber beendet werden.

Aus dem Diagramm in Fig. 4 ist zu entnehmen, dass die durch das Intervall zwischen A und B₁ definierte Zeitspanne durch eine zweckmäßige Vorgabe der gemittelten Kälteträgertemperatur festgelegt werden kann. Eine Parallelverschiebung der gemittelten Temperaturkurve zu niedrigeren Temperaturen verkürzt die Zeitdauer der Sorptionsphase. Die Sorptionsphase endet dann zu einem neuen Zeitpunkt B₂. Der Anlagenwirkungsgrad ist dadurch verringert, die erreichbare Kälteleistung erhöht sich jedoch. Eine hier nicht dargestellte Parallelverschiebung der gemittelten Temperaturkurve zu höheren Temperaturen führt in entsprechender Weise zu einem dazu gegenteiligen Effekt.

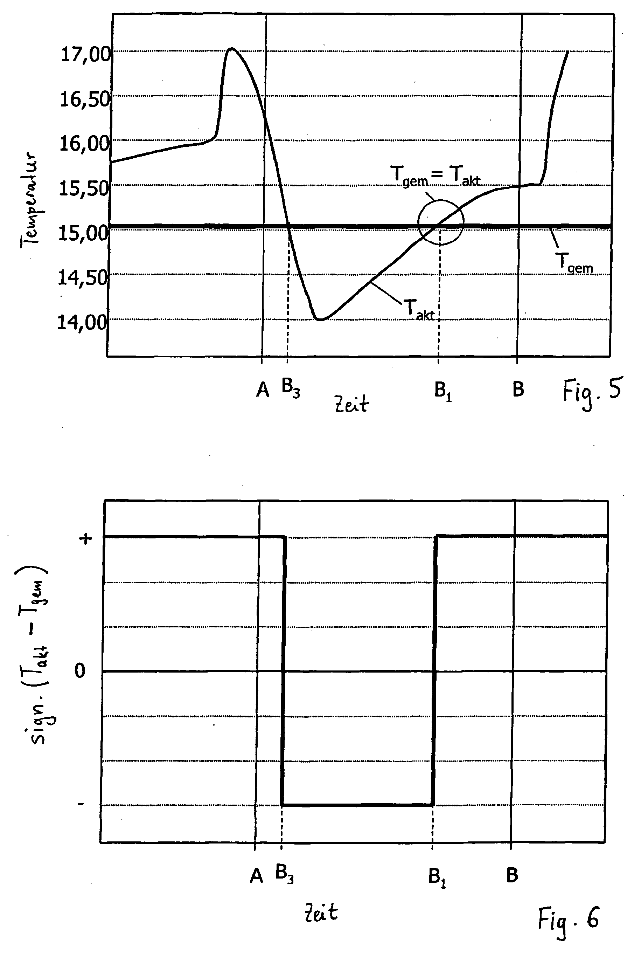

Fig. 5 zeigt eine gemittelte Temperaturkurve in Form eines zeitlich konstanten einfachen Schwellwertes. Eine derartige Temperaturvorgabe lässt sich am einfachsten realisieren. Bei einem derartigen Schwellwert sind prinzipiell zwei Schnittpunkte zwischen der Kurve der aktuellen Kälteträgertemperatur und der Linie des Schwellwertes möglich, die in der Figur mit den Bezugszeichen B₁ und B₃ bezeichnet sind. Zur Auswahl des richtigen Schnittpunktes zwischen beiden Kurven, d.h. des für die Beendigung der Sorptionsphase richtigen Zeitpunktes, kann in der Steuereinheit das Vorzeichen der Differenz in dem Ausdruck Tₐₖₜ - T_{gem} ausgewertet werden.

Fig. 6 zeigt die Vorzeichenfunktion sign( Tₐₖₜ - T_{gem}) gemäß den Kurven aus Fig. 5.

Es ist erkennbar, dass im Zeitpunkt B₃ ein Vorzeichensprung von + nach - erfolgt, während sich der Zeitpunkt B₁ durch einen Sprung der Vorzeichenfunktion von - nach + auszeichnet. Bei einer zeitlich hinreichend engen Registrierung der aktuellen Kälteträgertemperatur kann der an den Zeitpunkten B₃ und B₁ erfolgende Vorzeichenwechsel der Differenz zusammen mit seiner Richtung quasi instantan festgestellt und die entsprechenden Steuerimpulse an die Ventileinrichtungen ausgegeben werden.

Die vorhergehend beschriebenen Vorgehensweisen bieten einen gegenüber konventionellen Anlagen entscheidenden Vorteil. Durch die Kenntnis der gemittelten Temperatur des Kälteträgers und der damit verbundenen Regelung wird das Einstellen einer maximalen Kälteleistung möglich. Desweiteren ist bei einer derartigen Regelung das exakte Vorgeben und Einhalten von Sollwerten der Kälteträgertemperatur möglich. Bei einer entsprechenden Wahl eines Sollwertes werden die Sorptionsphasen länger ausgefahren, wodurch sich der Anlagenwirkungsgrad verbessert, aber geringere Kälteleistungen bei insgesamt gesteigerter Effizienz möglich sind. Durch die Wahl des Sollwertes ist eine bedarfsgerechte Kälteerzeugung möglich.

Das durch unterschiedliche Einsatzbedingungen variierende Potential zur Kälteerzeugung der Sorptionskälteanlage wird dadurch berücksichtigt, indem durch die Steuerung mithilfe der einmal vorgegebenen Solltemperatur des Kälteträgers die Länge der Sorptionsphasen und damit des Arbeitszyklus der Anlage selbständig durch die Anlage selbst reguliert wird. Damit wird erreicht, dass ausgehend von der vorgegebenen Solltemperatur des Kälteträgers stets eine auf den Anlagenwirkungsgrad hin optimierte Betriebsweise erfolgt, wobei die Zeitdauer der Arbeitszyklen variabel angepasst sind.

Durch die Vorgabe eines festen Sollwertes für die Kälteträgertemperatur kann somit auch ein optimaler Betrieb der Sorptionskälteanlage bei unterschiedlich ausgebildeten Kühlstellen, d.h. unterschiedlichen Arten von Kälteabnehmern, gewährleistet werden. Dies betrifft insbesondere in den Kälteträgerkreislauf integrierte Wärmetauscherlüftereinheiten mit einer Temperatur von beispielsweise 12°C am Auslass LT_IN des Kälteträgerreservoirs und 7°C am Rücklauf LT_OUT des Kälteträgerreservoirs im Vergleich zu Kühldeckenanordnungen in Raumwänden, Böden und Decken, bei denen sich die Temperatur im Kälteträgerkreislauf zwischen dem Auslass LT_IN und dem Rücklauf LT_OUT beispielsweise in einem Bereich von 18°C und 15°C ändert.

### Bezugszeichenliste

- A1: erster Adsorber
- A2: zweiter Adsorber

- HT: Heißreservoir

- HV_IN: Vorlauf-Ventileinrichtung
- HV_A1_IN: Dreiwegeventil für Adsorber 1
- HV_A2_IN: Dreiwegeventil für Adsorber 2

- HV_OUT: Rücklauf-Ventileinrichtung
- HV_A1_OUT: Dreiwegeventil für Adsorber 1
- HV_A2_OUT: Dreiwegeventil für Adsorber 2

- MT: Kühlmittelreservoir
- MT_IN: Auslass
- MT_OUT: Rücklauf

- LT: Kälteträgerreservoir
- LT_IN: Auslass
- LT_OUT: Rücklauf

- E: Verdampfer
- E_IN: Verdampfereingang
- E_OUT: Verdampferausgang

- C: Kondensator
- C_IN: Eingang
- C_OUT: Ausgang
- SE: Steuereinheit

- T_LTS_OUT: Kälteträgerrücklaufsensor
- T_MTS_OUT: Kühlmittelrücklaufsensor

## Patentansprüche

1. Verfahren zur Leistungsregelung einer Sorptionskältevorrichtung mit einer Adsorbereinrichtung, welche aus einer wechselnd beaufschlagbaren Anordnung aus einem ersten Adsorber (A1) und einem zweiten Adsorber (A2) besteht, einem Kondensator (C) und einem mit einem Kälteträgerfluid (KT) durchströmten Verdampfer (E), mit einer Wechselbeaufschlagung der Adsorbereinrichtung durch eine über eine Steuereinheit betriebene Ventileinrichtung (HV_IN, HV_OUT) sowie mit einem Kreisprozess aus mindestens einer Sorptionsphase und mindestens einer Wärmerückgewinnungsphase,
**dadurch gekennzeichnet, dass**
- im Rücklauf des Verdampfers ein Messen einer aktuellen Kälteträgeraustrittstemperatur (Tₐₖₜ) erfolgt,
- während der ersten und zweiten Sorptionsphase eine Berechnung einer gemittelten Kälteträgeraustrittstemperatur (T_{gem}) mit einem Vergleich mit der aktuellen Kälteträgeraustrittstemperatur (Tₐₖₜ) ausgeführt wird und
- ein Steuersignal zu der Beendigung der Sorptionsphase in Abhängigkeit von der Differenz zwischen der gemittelten Kälteträgeraustrittstemperatur (T_{gem}) und der aktuellen Kälteträgeraustrittstemperatur (Tₐₖₜ) ausgelöst wird.

2. Verfahren nach Anspruch 1,
**dadurch gekennzeichnet, dass**
die Sorptionsphase in der Adsorbereinrichtung im wesentlichen zu einem Zeitpunkt beendet wird, wenn die Differenz zwischen der gemittelten Kälteträgeraustrittstemperatur (T_{gem}) und der aktuellen Kälteträgeraustrittstemperatur (Tₐₖₜ) verschwindet.

3. Verfahren nach einem der Ansprüche 1 oder 2,
**dadurch gekennzeichnet, dass**
die gemittelte Kälteträgeraustrittstemperatur (T_{gem}) als ein Kälteträgertemperatursollwert (Tₛₒₗₗ) vorgegeben und die Dauer der Sorptionsphase über das Einstellen des Kälteträgertemperatursollwerts bestimmt wird.

4. Sorptionskältevorrichtung, umfassend eine Adsorbereinrichtung, welche aus einer wechselnd beaufschlagbaren Anordnung aus einem ersten Adsorber (A1) und einem zweiten Adsorber (A2) besteht, einen Kondensator (C) und einen mit einem Kälteträgerfluid (KT) durchströmten Verdampfer (E) mit einer Ventileinrichtung (HV_IN, HV_OUT) zur gesteuerten Beaufschlagung der Adsorbereinrichtung,
wobei die Sorptionskältevorrichtung mit einem Kreisprozess aus mindestens einer Sorptionsphase und mindestens einer Wärmerückgewinnungsphase betrieben wird und
wobei die Sorptionskältevorrichtung die folgenden Merkmale aufweist:
eine im Rücklauf des Verdampfers angeordnete Temperaturmesseinrichtung in Form eines Kälteträgerrücklaufsensors (T_LTS_OUT), eine Steuereinheit (SE) mit einer Recheneinheit (RE) zum Bestimmen einer über mindestens eine Adsorptionsphase gemittelten Kälteträgeraustrittstemperatur und einem Vergleichsglied (VG) zum Vergleich der gemittelten Kälteträgeraustrittstemperatur mit einer aktuellen Kälteträgeraustrittstemperatur und einem von der Steuereinheit betriebenen Aktor zum Stellen der Ventileinrichtung in Abhängigkeit von der Differenz zwischen der gemittelten Kälteträgeraustrittstemperatur und einer aktuellen Kälteträgeraustrittstemperatur **dadurch gekennzeichnet, dass** - im Rücklauf des Verdampfers ein Messen einer aktuellen Kälteträgeraustrittstemperatur (Tₐₖₜ) erfolgt - während der ersten und zweiten Sorptionsphase eine Berechnung einer gemittelten Kälteträgeraustrittstemperatur (T_{gem}) mit einem Vergleich mit der aktuellen Kälteträgeraustrittstemperatur (Tₐₖₜ) ausgeführt wird und - ein Steuersignal zu der Beendigung der Sorptionsphase in Abhängigkeit von der Differenz zwischen der gemittelten Kälteträgeraustrittstemperatur (T_{gem}) und der aktuellen Kälteträgeraustrittstemperatur (Tₐₖₜ) ausgelöst wird.

5. Vorrichtung nach Anspruch 4 ,
**dadurch gekennzeichnet, dass**
eine den Vorlauf zu beiden Adsorbern regulierende ersten Ventileinrichtung (HV_IN) und eine den Rücklauf von den beiden Adsorbern regulierende zweiten Ventileinrichtung (HV_OUT) vorgesehen ist.

6. Vorrichtung nach Anspruch 4,
**dadurch gekennzeichnet, dass**
die erste und/oder die zweite Ventileinrichtung eine Anordnung aus jeweils paarweise geschalteten 3-Wege-Umschaltventilen (HV_A1_IN, HV_A2_IN, HV_A1_OUT, HV_A2_OUT) als Schaltungsaktoren aufweist.

7. Vorrichtung nach Anspruch 4, **dadurch gekennzeichnet, dass** das Kälteträgerfluid Wasser ist.

## Claims

1. Method for controlling the capacity of a sorption refrigeration apparatus, having an adsorber device comprised of an alternately supplyable assembly of a first adsorber (A1) and a second adsorber (A2), a condenser (C) and an evaporator (E) flown through by a refrigerating fluid (KT), with an alternate supply of the adsorber device by a valve means (HV_IN, HV_OUT) operated by a control unit, and with a cyclic process of at least one sorption phase and at least one heat recovery phase,
**characterized in that**
- a current refrigerant outlet temperature (Tₐₖₜ) is measured in the return of the evaporator,
- a calculation of an averaged refrigerant outlet temperature (T_{gem}) including a comparison with the current refrigerant outlet temperature (Tₐₖₜ) is carried out during the first and second sorption phase, and
- a control signal is triggered so as to terminate the sorption phase in response to the difference between the averaged refrigerant outlet temperature (T_{gem}) and the current refrigerant outlet temperature (Tₐₖₜ).

2. Method according to claim 1,
**characterized in that**
the sorption phase in the adsorber device is substantially terminated at a time when the difference between the averaged refrigerant outlet temperature (T_{gem}) and the current refrigerant outlet temperature (Tₐₖₜ) disappears.

3. Method according to one of claims 1 or 2,
**characterized in that**
the averaged refrigerant outlet temperature (T_{gem}) is predetermined as a set value for the refrigerant temperature (Tₛₒₗₗ) and the duration of the sorption phase is determined by the adjustment of the set value for the refrigerant temperature.

4. Sorption refrigeration apparatus, having an adsorber device comprised of an alternately supplyable assembly of a first adsorber (A1) and a second adsorber (A2), a condenser (C) and an evaporator (E) flown through by a refrigerating fluid (KT) and having a valve means (HV_IN, HV_OUT) for the controlled supply of the adsorber device,
wherein the sorption refrigeration apparatus is operated with a cyclic process of at least one sorption phase and at least one heat recovery phase, and wherein the sorption refrigeration apparatus comprises the following features:
a temperature measuring device provided in the return of the evaporator in the form of a refrigerant return flow sensor (T_LTS_OUT), a control unit (SE) comprising a computing unit (RE) for determining a refrigerant outlet temperature averaged during at least one adsorption phase, and a comparing element (VG) for comparing the averaged refrigerant outlet temperature with a current refrigerant outlet temperature, and an actuator operated by the control unit for controlling the valve means in response to the difference between the averaged refrigerant outlet temperature and a current refrigerant outlet temperature,
**characterized in that**
- a current refrigerant outlet temperature (Tₐₖₜ) is measured in the return of the evaporator,
- a calculation of an averaged refrigerant outlet temperature (T_{gem}) including a comparison with the current refrigerant outlet temperature (Tₐₖₜ) is carried out during the first and second sorption phase, and
- a control signal is triggered so as to terminate the sorption phase in response to the difference between the averaged refrigerant outlet temperature (T_{gem}) and the current refrigerant outlet temperature (Tₐₖₜ).

5. Apparatus according to claim 4,
**characterized in that**
a first valve means (HV_IN) controlling the forward flow to both adsorbers and a second valve means (HV_OUT) controlling the return flow from the two adsorbers are provided.

6. Apparatus according to claim 4,
**characterized in that**
the first and/or the second valve means comprise(s) an assembly of three-way reversing valves (HV_A1_IN, HV_A2_IN, HV_A1_OUT, HV_A2_OUT) each switched in pairs as switching actuators.

7. Apparatus according to claim 4,
**characterized in that**
the refrigerating fluid is water.

## Revendications

1. Procédé pour la régulation de puissance d'un appareil frigorifique à sorption avec un système d'adsorption qui est constitué d'un agencement d'un premier adsorbeur (A1) et d'un second adsorbeur (A2) susceptibles d'être alimentés en alternance, d'un condenseur (C) et d'un évaporateur (E) traversé par un fluide caloporteur (KT), avec une alimentation alternée du système d'adsorption au moyen d'un système de vannes (HV_IN, HV_OUT) actionnées par une unité de commande, et comprenant un processus en boucle d'au moins une phase de sorption et d'au moins une phase de récupération de chaleur,
**caractérisé en ce que**
- dans le retour de l'évaporateur on effectue une mesure d'une température de sortie actuelle du caloporteur (Takt),
- pendant la première et la seconde phase de sorption on exécute un calcul d'une température de sortie moyenne du caloporteur (Tgem) et une comparaison avec la température de sortie actuelle du caloporteur (Takt), et
- on déclenche un signal de commande pour terminer la phase de sorption en fonction de la différence entre la température de sortie moyenne du caloporteur (Tgem) et la température de sortie actuelle du caloporteur (Takt).

2. Procédé selon la revendication 1,
**caractérisé en ce que** la phase de sorption est terminée dans le système d'adsorption essentiellement à un instant auquel la différence entre la température de sortie moyenne du caloporteur (Tgem) et la température de sortie actuelle du caloporteur (Takt) disparaît.

3. Procédé selon l'une des revendications 1 ou 2,
**caractérisé en ce que** la température de sortie moyenne du caloporteur (Tgem) est imposée sous forme d'une valeur de consigne de température (Tsoll) du caloporteur, et l'on détermine la durée de la phase de sorption via le réglage de la température de consigne de la température du caloporteur.

4. Appareil frigorifique à sorption, comprenant un système d'adsorption qui est constitué d'un agencement formé d'un premier adsorbeur (A1) et d'un second adsorbeur (A2), susceptibles d'être alimentés en alternance, d'un condenseur (C) et d'un évaporateur (E) traversé par un fluide caloporteur (KT), avec un système de vannes (HV_IN, HV_OUT) pour alimenter le système d'adsorption de façon commandée,
dans lequel l'appareil frigorifique à sorption est mis en fonctionnement avec un processus en boucle d'au moins une phase de sorption et d'au moins une phase de récupération de chaleur,
et l'appareil frigorifique à sorption présente les éléments techniques suivants :
un dispositif de mesure de température, agencé dans le retour de l'évaporateur sous la forme d'un détecteur de retour de caloporteur (T_LTS_OUT), d'une unité de commande (SE) avec une unité de calcul (RE) pour déterminer au moins une température de sortie moyenne du caloporteur sur au moins une phase d'adsorption, et d'un circuit comparateur (VG) pour comparer la température de sortie moyenne du caloporteur avec une température de sortie actuelle du caloporteur, et
d'un actionneur actionné par l'unité de commande pour régler le système de vannes en fonction de la différence entre la température de sortie moyenne du caloporteur et d'une température de sortie actuelle du caloporteur,
**caractérisé en ce que**
- dans le retour de l'évaporateur a lieu une mesure d'une température de sortie actuelle du caloporteur (Takt),
- pendant la première et la seconde phase de sorption un calcul est effectué d'une température de sortie moyenne du caloporteur (Tgem) avec comparaison avec la température de sortie actuelle du caloporteur (Takt), et
- un signal de commande est déclenché pour terminer la phase de sorption en fonction de la différence entre la température de sortie moyenne du caloporteur (Tgem) et la température de sortie actuelle du caloporteur (Takt).

5. Appareil selon la revendication 4,
**caractérisé en ce qu'**il est prévu un premier système de vannes (HV_IN) qui régule l'arrivée vers les deux adsorbeurs, et un second système de vannes (HV_OUT) qui régule le retour des deux adsorbeurs.

6. Appareil selon la revendication 4,
**caractérisé en ce que** le premier et/ou le second système de vannes comprend un agencement de vannes de commutation à trois voies branchées respectivement par paires (HV_A1_IN, HV_A2_IN, HV_A1_OUT, HV_A2_OUT) à titre d'actionneurs de commutation.

7. Appareil selon la revendication 4,
**caractérisé en ce que** le fluide caloporteur est de l'eau.
